# EUROPEAN PATENT APPLICATION

(11) **EP 4 312 451 A1**
(43) Date of publication of application: **31.01.2024**
(21) Application number: 22186925.8
(22) Date of filing: 26.07.2022
(51) Int. Cl.: H04W 36/30, H04W 36/08, H04W 36/24, H04W 36/36, H04W 48/16, H04W 40/12, H04W 76/34, H04W 36/00

(54) **VEHICLE, APPARATUS, COMPUTER PROGRAM, AND METHODS FOR CONTROLLING A CONNECTION BETWEEN A USER DEVICE AND BLUETOOTH LOW ENERGY, BLE, NODES OF A VEHICLE**

(71) Applicant: Bayerische Motoren Werke Aktiengesellschaft, 80809 München (DE)
(72) Inventor: Mourad, Alaa, 80995 München (DE)

(57) **Abstract**

Embodiments relate to a vehicle (320), an apparatus (400), a computer program, and methods (100, 200) for a user device (310) and a vehicle (320) and for controlling a connection between a user device (310) and Bluetooth Low Energy (BLE) nodes of a vehicle (320). The method (100) for the user device (310) comprises establishing (110) a first connection (341) to a first BLE node (331) of the vehicle (320). Further, the method (100) comprises obtaining (120) information on a connection quality of the first connection (241) to the first BLE node (331). Also, the method (100) comprises terminating (130) the first connection (341) and establishing a second connection (342) to a second BLE node (332) based on the information on the connection quality.

## Description

Embodiments of the present disclosure relate to a vehicle, an apparatus, a computer program, and methods for controlling a connection between a user device and Bluetooth Low Energy (BLE) nodes of a vehicle. In particular but not exclusively, embodiments relate to a concept for a handover of a communication session of a vehicle and a user device.

In vehicles, communication plays an increasingly important role. For this reason, vehicles may be equipped with various communication means, in particular BLE nodes to communicate with user devices. In some applications, vehicles may be equipped with a plurality of BLE nodes for discovery and (data) communication and UWB nodes for (high accuracy) localization. One or more of the BLE nodes may be installed inside the vehicle while other BLE nodes are installed on the exterior (outside of) the vehicle. In such applications, a user device may establish a connection to one of the BLE nodes. When a user carrying the user device approaches the vehicle, the user device, e.g., connects to one of the BLE nodes in order to unlock the vehicle. However, when the user approaches the vehicle or sat down in the vehicle, the problem may occur that the user device maintains the connection to the connected BLE node, although a connection quality of the connection has become worse and/or insufficient for a desired use.

Hence, there may be a demand for an approach tackling the aforementioned problem.

This demand may be satisfied by the subject-matter of the appended independent and dependent claims.

Embodiments are based on the finding that a connection quality of a connection to a BLE node may worsen and that the BLE node for a connection between a vehicle and a user device may be switched to provide a sufficient connection quality. One idea of the present disclosure is to compare the connection quality of a current connection to a first BLE node with the connection quality provided by at least one second BLE node of the vehicle and, if the second BLE node provides a better connection quality, switch from the first BLE node to the second BLE node providing a better connection quality. In particular, embodiments of the proposed concept may serve to handover a communication session to the BLE node providing the best connection quality among the BLE nodes of the vehicle.

Another finding is that BLE nodes of the same vehicle have the same identity and identity resolving key (IRK) address. One idea of the present disclosure, therefore, is to compare the identity and/or IRK addresses of BLE nodes to make sure that the first and the second BLE node belong to the same vehicle.

Embodiments provide a method for a user device and for controlling a connection between the user device and Bluetooth Low Energy (BLE) nodes of a vehicle. The method comprises establishing a first connection to a first BLE node of the vehicle. Further, the method comprises obtaining information on a connection quality of the first connection to the first BLE node. Also, the method comprises terminating the first connection and establishing a second connection to a second BLE node based on the information on the connection quality. In other words, a BLE node for a connection between the user device and the vehicle is switched based on a connection quality of a BLE node currently connected to the user device. This, e.g., provides that the BLE node for the connection between the user device and the vehicle is switched if the first (currently used) BLE node provides an insufficient, worse, or worsening connection quality.

In practice, terminating the first connection and establishing the second connection to the second BLE node may comprise obtaining information on a connection quality provided by the second BLE node of the vehicle and determining, based on a comparison of the first and the second information, whether the connection quality provided by the second BLE node is higher than the connection quality of the first connection to the first BLE node. In this case, terminating the first connection and establishing the second connection may comprise terminating the first connection and establishing the second connection if the connection quality provided by the second BLE node is higher than the connection quality of the first connection if the connection quality provided by the second BLE node is higher than the connection quality of the first connection. In other words, the BLE node for the connection may be switched if the connection quality provided by the first BLE node is not at least equal to the connection quality provided by the second BLE node. In this way, it may be ensured that the BLE node is only switched if the second BLE node provides a higher connection quality.

In some embodiments, the method further comprises obtaining identity information on the second BLE node and the identity information may indicate whether the second BLE node is installed on the vehicle. In this case, terminating the first connection and establishing the second connection may comprise terminating the first connection and establishing the second connection based on the identity information. In this way, it may be ensured that the second BLE node belongs to the same vehicle as the first BLE node such that the second connection is established with the same vehicle, as it may be desired in some applications.

In practice, the first and the second BLE node may have the same identity information and terminating the first connection and establishing the second connection based on the identity information comprises obtaining the identity information of the first and the second BLE node, checking whether the identity information of the first and the second BLE node are identical, and terminating the first connection and establishing a second connection if the identity information of the first and the second BLE node are identical. In this way, it may be obtained from the identity information of the second BLE node that it belongs to the same vehicle, even if the identity information of the second BLE node does not explicitly specify the vehicle (e.g., its manufacturer, model, chassis number, or the like). Hence, this allows arbitrary identity information which may avoid that the vehicle is identified based on the identity information of the BLE nodes.

In some embodiments, the information on the connection quality of the first connection is indicative of a first received signal strength indication (RSSI) of the first connection and obtaining the information on the connection quality of the first connection comprises obtaining the RSSI of the first connection from a first signal from the first BLE node. Accordingly, the information on the connection quality of the second connection may be indicative of a second RSSI of the second connection and obtaining the information on the connection quality of the second connection may comprise obtaining the RSSI of the second connection from a second signal from the second BLE node. In this case, terminating the first connection and establishing the second connection may comprise terminating the first connection and establishing the second connection based on a comparison of the first and the second RSSI. In practice, e.g., the BLE nodes are switched if the RSSI of the second BLE node is higher than the RSSI of the first BLE node. In doing so, it may be ensured that the BLE node is only switched if the second BLE node provides a higher signal strength and, thus, data/information loss and/or malfunctions may be avoided.

In some embodiments, one or more BLE nodes are installed inside the vehicle and one or more other BLE nodes on the exterior of the vehicle. In this case, it may be desired to hand over the communication session from a BLE node on the exterior of the vehicle to a BLE node installed inside the vehicle or vice versa (e.g., when a user carrying the user device approaches and enters the vehicle) for a higher connection quality.

Accordingly, the first BLE node may be installed inside the vehicle and the second BLE node may be installed on the exterior of the vehicle or the second BLE node may be installed inside the vehicle and the first BLE node may be installed on the exterior of the vehicle.

In some embodiments, the first connection serves a communication session between the user device and the vehicle. In this case, terminating the first connection and establishing the second connection may comprise performing a handover of the communication session from the first connection to the second connection. In this way, a seamless transition of the communication session from the first to the second connection may be provided.

Other embodiments provide a method for a vehicle and for controlling a connection between Bluetooth Low Energy, BLE, nodes of the vehicle and a user device. The method comprises establishing a first connection between a user device and a first BLE node of the vehicle and providing information on a connection quality of the first connection to the user device. As well, the method comprises providing information on a connection quality provided by a second BLE node of the vehicle to the user device for terminating the first connection and establishing the second connection based on a comparison of the information on the connection quality of the first connection and the connection quality provided by the second BLE node. In this way, the vehicle enables the user device to switch the BLE node for a sufficient or better connection quality of a connection to the user device, as laid out in more detail herein.

In some embodiments, the method further comprises transmitting identity information of the first and the second BLE node to the user device for checking whether the identity information of the first and the second BLE node are identical and terminating the first connection and establishing the second connection if the identity information of the first and the second BLE node are identical. In this way, the user device may be enabled to ensure that the second BLE node belongs to the same vehicle as the first BLE node such that the second connection is established with the same vehicle as the first connection, as may be desired in some applications.

In practice, the first information may be indicative of a first received signal strength indication, RSSI, of the first connection and providing the first information may comprise transmitting a first signal to the user device for obtaining the RSSI of the first connection from the first signal. Accordingly, the second information may be indicative of a second RSSI of the second connection and providing the second information may comprise transmitting a second signal to the user device for obtaining the RSSI of the second connection from the second signal for terminating the first connection and establishing the second connection based on a comparison of the first and the second RSSI. In this way, the user device may be enabled to ensure based on the RSSI that the connection quality is improved and data/information loss or malfunctions is/are avoided.

Further embodiments provide a computer program having a program code for performing at least one of the methods of the preceding claims, when the computer program is executed on a computer, a processor, or a programmable hardware component.

Other embodiments provide an apparatus comprising one or more interfaces for communication and a data processing circuit configured to control the one or more interfaces and execute, using the one or more interfaces, an embodiment of the method proposed herein.

Further embodiments provide a vehicle comprising an embodiment of the apparatus proposed herein.

Some examples of apparatuses, methods and/or computer programs will be described in the following by way of example only, and with reference to the accompanying figures, in which
Fig. 1 shows a flow chart schematically illustrating an embodiment of a method for a user device and for controlling a connection between the user device and BLE nodes of a vehicle;
Fig. 2 shows a flow chart schematically illustrating an embodiment of a method for a vehicle and for controlling a connection between a user device and BLE nodes of the vehicle;
Fig. 3 schematically shows an exemplary use case of the proposed concept; and
Fig. 4 shows a block diagram schematically illustrating an apparatus according to the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

As mentioned above, vehicles may be equipped with a plurality of BLE nodes, in particular, for communication with user devices, e.g., for digital car key (DCK) applications. Such vehicles might have one or more BLE nodes outside and one or more other BLE nodes inside the vehicle. When approaching the vehicle, a user device might connect to one of the outside nodes. However, after the user carrying the user device has entered the vehicle, the quality of a connection to the connected BLE node might drop and may become worse and/or even insufficient for the desired use, e.g., the digital car key application. This problem especially occurs if the exterior and/or windows of the vehicle comprise metal and, therefore, may shield signals of the BLE communication between the user device and the vehicle.

The subject-matter of the present disclosure provides an approach tackling this problem. Various features and aspects of this approach are described in more detail below with reference to the appended drawings.

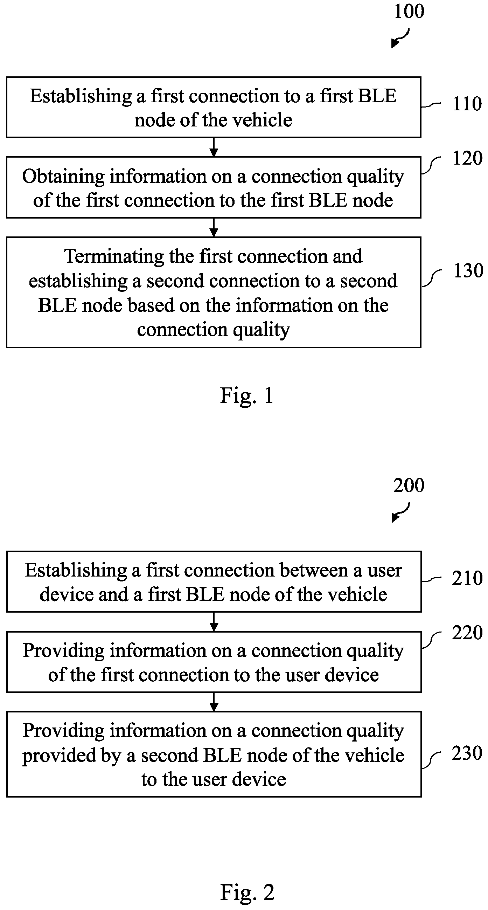

Fig. 1 shows a flow chart schematically illustrating an embodiment of a method 100 for a user device and for controlling a connection between the user device and BLE nodes of a vehicle.

The user device can be or comprise any user equipment such as a mobile phone, a laptop, a tablet, a smartwatch, or the like. The vehicle can be any ground vehicle (e.g., car, truck, bus, motorcycle, or the like), aircraft, or watercraft. In context of the present disclosure, the BLE nodes can comprise or correspond to any devices that are installed on the vehicle and serve for other BLE (enabled) devices as local access points or interfaces to a BLE network of the vehicle.

Method 100 comprises establishing 110 a first connection to a first BLE node of the vehicle. For this, the user device may be equipped with appropriate means (e.g., a BLE interface, antenna/s, software) for connecting with a BLE node of the vehicle and may exchange data for establishing the first connection and communication according to a BLE communication protocol. In practice, the user device may discover the first BLE node by receiving an advertising message/signal from the first BLE node and transmit a connection request in response to the advertising message to connect with the first BLE node. The established first connection, then, may be used for various applications. In practice, the first connection, e.g., is used for unlocking the vehicle using the user device in connection with a DCK system of the vehicle. Additionally or alternatively, the first connection may be also used for operating the vehicle, e.g., a remote parking, parking heater, theft protection, and/or the like.

Further, method 100 comprises obtaining 120 information on a connection quality of the first connection to the first BLE node. As the skilled person having benefit from the present disclosure will appreciate, the information on the connection quality may correspond to or comprise any information indicating a quality of transmissions or communication via the first connection. In practice, the information on the connection quality of the first connection may comprise or may be indicative of a received signal strength indication (RSSI), herein referred to as first RSSI, of the first connection and/or equivalent information. The information on the connection quality, e.g., is determined based on a signal quality and/or signal strength. Accordingly, the first RSSI of the first connection may be obtained from a first signal from the first BLE node. As the skilled person having benefit from the present disclosure will understand, the first signal can be any communication or advertising signal of the first BLE node and that the RSSI may be determined by the user device from a signal strength of such a signal. The RSSI and/or the equivalent information on the connection quality may be used to determine whether the connection quality is worsening and/or even insufficient for a desired use and, if so, the user device may switch from the first BLE node to the second BLE node.

Accordingly, method 100 provides for terminating 130 the first connection and establishing a second connection to a second BLE node based on the information on the connection quality. In some scenarios, the second BLE node may provide a better/higher connection quality than the first connection. So, method 100 may provide that the connection quality of a connection between the user device and the vehicle is improved. In particular, this may allow to ensure the availability and/or usability of a desired application, e.g., when the connection quality worsens such that it is insufficient for said application while the second connection or the second BLE node may provide a sufficient connection quality. For this, the first connection may be terminated and the second connection may be established if the connection quality falls short of a predefined connection quality or a connection quality required by a desired application of the BLE connection.

In order to terminate the first connection, the user device may transmit a disconnect request or command to the first BLE node or a BLE network including the first BLE node. For establishing the second connection with the second BLE node, the user device, e.g., receives an advertisement message from the second BLE node and transmits a connection request in response to the advertisement message to the second BLE node. In practice, the user device may be configured such that it cannot be connected to more than one BLE node simultaneously. Hence, prior to establishing the second connection, the first connection may be terminated first and the second connection is only established after the first connection has been terminated.

Optionally, for terminating 130 the first connection and establishing the second connection, information on a connection quality provided by the second BLE node (e.g., the connection quality that is expected when the user device establishes the second connection with the second BLE node) of the vehicle is obtained to make sure that the connection quality increases when switching to the second BLE node. To this end, it may be determined whether the connection quality provided by the second BLE node is higher than the connection quality of the first connection to the first BLE node based on the information on the connection quality provided by the second BLE node. Then, the first connection is terminated and the second connection may be established if the connection quality provided by the second BLE node is higher than the connection quality of the first connection. In doing so, the first connection may be terminated and the second connection is established only if (it is expected that) the connection quality increases by switching from the first to the second BLE node. Otherwise, the first connection is not terminated and/or the second connection is not established. In this way, it can be ensured that the connection quality increases when switching from the first to the second BLE node. In other words, this may provide that the connection quality of a BLE connection between the vehicle and the user device does not (further) decrease when switching from the first to the second BLE node.

Analogously to the information on the connection quality of the first connection, the information on the quality provided by the second BLE node may correspond to or comprise any information indicating a (expected) quality of transmissions or communication via the second connection with the second BLE node. As well, the information on the connection quality provided by the second BLE node may comprise or may be indicative of a received signal strength indication (RSSI), herein referred to as second RSSI. The information on the connection quality, e.g., is determined based on a signal quality and/or signal strength. In particular, the second RSSI may be obtained from a second signal from the second BLE node. As the skilled person having benefit from the present disclosure will understand, the second signal can be any communication or advertising signal of the first BLE node and that the second RSSI may be determined by the user device from a signal strength of such a signal. Further, the skilled person will understand that the second RSSI or any equivalent information may be used to determine whether the connection quality increases when the user device switches from the first to the second BLE node for the BLE connection with the vehicle.

In order to make sure that the connection quality increases when switching to the second BLE node, the first connection may be terminated based on a comparison of the first and the second RSSI and the second connection may be established based on the comparison of the first and second RSSI. In doing so, the first connection is terminated and the second connection established (only) if the second RSSI indicates that the second BLE node (currently) provides a better connection quality than the first BLE node to ensure that the connection quality increases.

In some scenarios, one or more other vehicles may be in the vicinity of the vehicle that are also equipped with BLE nodes. In such scenarios, it may be desired to make sure that the second BLE node belongs to the same vehicle as the first BLE node and not to any one of the other vehicles. This, e.g., is particularly relevant when the BLE connection between the user device and the vehicle is used for a vehicle-specific application, e.g., for locking and/or unlocking the vehicle. To this end, it is proposed to check whether the second BLE node belongs to the same vehicle as the first BLE node. In practice, BLE nodes may have a distinct identity which indicates to which vehicle they belong. Hence, e.g., identity information on the second BLE node may be used to check whether the first and the second BLE node belong to the same vehicle.

Accordingly, method 100 may further comprise obtaining identity information on the second BLE node which indicates whether the second BLE node is installed on the vehicle that comprises the first BLE node. Then, the user device may switch from the first to the second BLE node based on the information on the identity of the second BE node. Specifically, the first connection may be terminated based on the identity information as well as the second connection may be established based on the identity information.

Some embodiments of the proposed concept are based on the finding that BLE nodes of the same vehicle use the same identity, e.g., in their advertising messages, and BLE nodes of the same vehicle, thus, may be identified by corresponding identities. Accordingly, it is proposed to check whether identity information on the first BLE node corresponds to the identity information of the second BLE node in order to check whether the first and the second BLE node have the same identity and, thus, belong to the same vehicle, i.e., are installed on the same vehicle.

So, in use cases, where the first and the second BLE node have the same identity information the user device may switch from the first to the second BLE node based on a comparison of the identity information on the first and the second BLE node. For this, method 100 may further provide for obtaining the identity information of the first and the second BLE node and checking whether the identity information of the first and the second BLE node are identical. Accordingly, the user device may switch from the first to the second BLE node, i.e., terminate the first connection and establish the second connection, if the identity information of the first and the second BLE node are identical.

As the skilled person having benefit from the present disclosure will appreciate that the proposed concept may be applied for a handover of a communication session of the user device and the vehicle.

As the skilled person having benefit from the present disclosure will understand, method 100 may be implemented together with an interrelated and complementary method for a vehicle, as stated in more detail below with reference to Fig. 2.

Fig. 2 shows a flow chart schematically illustrating an embodiment of a method 200 for a vehicle and for controlling a connection between a user device and BLE nodes of the vehicle.

As can be seen from the flow chart, method 200 comprises establishing 210 a first connection between a user device and a first BLE node of the vehicle. In accordance with what is described above, the first BLE node, e.g., transmits an advertising message to the user device in order to establish the first connection, specifically, to prompt the user device to respond with a connection request in response to the advertising message. As well, other equivalent procedures or measures of the vehicle and the user device may be used to establish the first connection.

Also, method 200 comprises providing 220 information on a connection quality of the first connection to the user device. In line with what is described above, this may be obtained from a signal quality and/or signal strength of signals from the first BLE node and may comprise or correspond to any information indicating a quality of transmissions or communication via the first connection. In practice, the information on the connection quality of the first connection may comprise or may be indicative of a received signal strength indication (RSSI). For providing 220 information on the connection quality, the vehicle may measure the RSSI from one or more signals from the user device at the first BLE node and/or may emit one or more appropriate signals enabling the user device to determine the RSSI from the emitted signals.

Further, method 200 comprises providing 230 information on a connection quality provided by a second BLE node of the vehicle to the user device for terminating the first connection and establishing the second connection based on a comparison of the first and the second information. In this way, the user device is enabled to determine based on a comparison of the connection quality of the first and the second connection whether the second BLE node provides a higher connection quality and, if so, switch to the second BLE node for a better connection quality.

For providing 230 information on the connection quality provided by a second BLE node, the second BLE node may emit one or more appropriate signals enabling the user device to determine the RSSI of the second BLE node and/or the vehicle may determine the RSSI from one or more signals from the user device at the second BLE node and transmit the RSSI to the user device.

As well, method 200 may comprises transmitting identity information of the first and the second BLE node to the user device for checking whether the first and the second BLE node belong to the same vehicle. In this way, the user device is enabled to make sure from the identity information that the second BLE node belongs to the same vehicle as the first BLE node which may be desired in some applications.

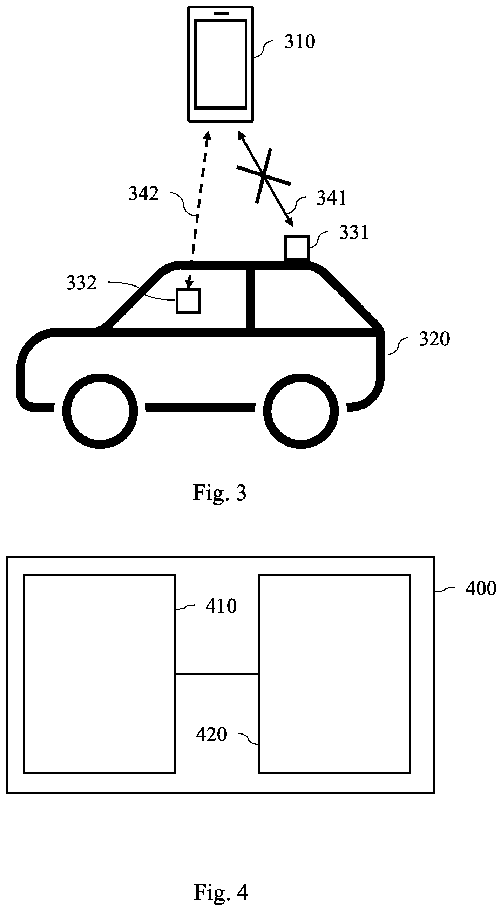

Further aspects and details of the proposed concept are described below with reference Fig. 3.

Fig. 3 schematically shows an exemplary use case of the proposed concept. The use case provides for a BLE connection between a user device 310 and a vehicle 320. For this, vehicle 320 is equipped with a first BLE node 331 and a second BLE node 332. The second BLE node 332 is installed inside the vehicle and the first BLE node 331 is installed on the exterior of the vehicle. So, when a user carrying the user device 310 approaches the vehicle 320, the user device may establish a first connection 341 with the first BLE node 331 as it is the only BLE node which is discovered by the user device 310 and/or as it provides a sufficient, a preferred, and/or the highest connection quality among the BLE nodes of the vehicle 320 and, thus, may be preferred over the second BLE node 332 (inside the vehicle). Once the first connection 341 has been established, it may serve a communication session, i.e., an interrelated exchange or communication of signals or messages for a (the same) predefined function or series of functions, between the user device and the vehicle 320. In practice, the communication session, e.g., serves for unlocking a vehicle door when the user approaches the vehicle 320 and may be later used for presence detection and/or for starting the vehicle 320. In this way, the user can unlock the vehicle 320 such that the user can open the vehicle door using the user device 310 and sit down in the vehicle 320. However, when the user sat down in the vehicle and/or after closing the vehicle door, signals of the first BLE node 331 may be shielded by the vehicle 320 such that a connection quality of the first connection 341 may drop (worsen) and may even become insufficient, e.g., for presence detection. In turn, the user device may be closer to the second BLE node 332 and signals from the second BLE node 332 may be less shielded from the user device 310 inside the vehicle 320. Accordingly, a RSSI (measured at the user device 310) of signals (e.g., communication or advertising signals) from the first BLE node 331 may be lower than a RSSI (measured at the user device 310) of signals (e.g., advertising signals) from the second BLE node 332. The user device 310 may measure and compare the RSSI of the first and the second BLE node 331 and 332 repeatedly or regularly in order to check whether the second BLE node 332 provides a higher connection quality (of a potential connection) than the first BLE node 331. In the aforementioned scenario, the second BLE node 332, e.g., may provide a higher connection quality as soon as the user device 310 is inside the vehicle 320. Thereby, the RSSI indicative of a connection quality provided by the second BLE node 332 may exceed the RSSI of the first BLE node 331. Comparing the RSSI of the first and the second BLE node 331 and 332, the user device 310 may recognize that the second BLE node 332 provides a higher connection quality than the first BLE node 331 and the respective first connection 341. In the present scenario, the user device 310, e.g., receives a communication signal from the first BLE node 331 and an advertising signal (conveying an advertising message) from the second BLE node 332. Then, the user device 310 determines the RSSI of the first and the second BLE node 331 and 332 from the communication signal and the advertising signal, respectively. In the present scenario, the vehicle 320 may attenuate the communication signal when the user device 310 is inside the vehicle 320 while a signal strength/quality of advertising signals from the second BLE node 332 increases at the user device. Thus, the RSSI of the second BLE node 332 is higher than the RSSI of the first BLE 331 the user device 310 inside the vehicle 320. Then, the user device 310 checks, based on a comparison of the RSSI of the first and the second BLE node 331 and 332, whether the second BLE node 332 provides a higher connection quality. If not, the user device 310 maintains the connection to the first BLE node 331. However, in the aforementioned scenario, the RSSI of the second BLE node 332 may be higher than the RSSI of the first BLE node 331 as soon as the user device 310 is inside the vehicle 320. In this case, the user device 310 may, then, switch from the first to the second BLE node 332 based on the comparison of their RSSI. For this, the first connection 341 is terminated and the second connection 342 is established.

Optionally, the communication signal and the advertising signal are indicative of an identity and/or IRK address of the first and the second BLE node 331 and 332, respectively. As stated above, the user device 310 can compare the identity information in order to check whether the first and the second BLE node 331 and 332 belong to the same vehicle in order to make sure that the user device 310 only switches between BLE nodes of the same vehicle, as desired, e.g., in vehicle-specific applications. In practice, BLE nodes of the same vehicle may have the same identity and IRK address. So, it is proposed that the user device 310 checks whether the identity and/or the IRK address of the first BLE node 331 and the second BLE node 332 match. If so, the user device 310 assumes that the first and the second BLE node 331 and 332 belong to the same vehicle and, therefore, allows to switch from the first to the second BLE node 332. Otherwise, if the identity and the IRK address do not match, the user device 310 refrains from switching to the second BLE node 332.

In some applications, it may be desired to transfer the ongoing communication session from the first to the second BLE node 332 when switching to the second BLE node 332. As the skilled person having benefit from the present disclosure will appreciate that, therefore, a handover (also referred to as "handoff') of the communication session from the first connection to the second connection may be performed when terminating the first connection 341 and establishing the second connection 342. In this way, the communication session is maintained and interruptions thereof are avoided. In practice, the handover may be an active handover, wherein the user device 310 proactively switches from the first to the second BLE node before the first BLE connection is terminated "by itself' due to a too weak signal, e.g., when the user device 310 or the vehicle 320 does not receive any signal within a predefined timeout period.

As the skilled person will understand, the proposed concept can be also implemented in a respective apparatus, as stated in more detail below with reference to Fig. 4.

Fig. 4 shows a block diagram schematically illustrating an embodiment of an apparatus 300 implementing the proposed concept.

As can be seen from Fig. 4, apparatus 400 comprises one or more interfaces 410 for communication and a data processing circuit 420 configured to control the one or more interfaces 410. The data processing circuit 420 is further configured to control the one or more interfaces 410 and execute, using the one or more interfaces 410, an embodiment of method 100 or method 200.

In embodiments the one or more interfaces 410 may comprise means for communication with vehicles or another server. For this, the one or more interfaces 410 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 410 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 410 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 4, the one or more interfaces 410 are coupled to the data processing circuit 420. In embodiments the data processing circuit 420 may comprise any means for processing information according to the proposed method. The data processing circuit 420 may be implemented using one or more processing units, one or more processing devices, any means for processing, such as a processor, a computer or a programmable hardware component being operable with accordingly adapted software. In other words, the described functions of the data processing circuit 420 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

The apparatus 400, in practice, may be implemented in a user device (e.g., user device 310) or a vehicle (e.g., vehicle 320).

### References

- 100: method for a user device
- 110: establishing a first connection
- 120: obtaining information
- 130: terminating the first connection and establishing a second connection
- 200: method for a vehicle
- 210: establishing a first connection
- 220: providing information
- 230: providing information
- 310: user device
- 320: vehicle
- 331: first BLE node
- 332: second BLE node
- 341: first connection
- 342: second connection

## Claims

1. A method (100) for a user device (310) and for controlling a connection between the user device (310) and Bluetooth Low Energy, BLE, nodes (331, 332) of a vehicle (320), the method comprising:
establishing (110) a first connection (341) to a first BLE node (331) of the vehicle (320);
obtaining (120) information on a connection quality of the first connection (341) to the first BLE node (331); and
terminating (130) the first connection (341) and establishing a second connection (342) to a second BLE node (332) based on the information on the connection quality.

2. The method of claim 1, wherein terminating (130) the first connection (341) and establishing the second connection (342) comprises:
obtaining information on a connection quality provided by the second BLE node (332) of the vehicle (320);
determining whether the connection quality provided by the second BLE node (332) is higher than the connection quality of the first connection (341) to the first BLE node (331); and
terminating the first connection (341) and establishing the second connection (342) if the connection quality provided by the second BLE node (332) is higher than the connection quality of the first connection (341).

3. The method (100) of claim 1 or 2, wherein the method (100) further comprises obtaining identity information on the second BLE node (332), wherein the identity information indicates whether the second BLE node (332) is installed on the vehicle (320), and wherein terminating (130) the first connection (341) and establishing the second connection (342) comprises terminating the first connection (341) and establishing the second connection based (342) on the identity information.

4. The method (100) of claim 3, wherein the first and the second BLE node (331, 332) have the same identity information, and wherein terminating (130) the first connection (341) and establishing the second connection (342) based on the identity information comprises:
obtaining the identity information of the first BLE node (331);
checking whether the identity information of the first and the second BLE node (331, 332) are identical; and
terminating the first connection (341) and establishing a second connection (342) if the identity information of the first and the second BLE node (331, 332) are identical.

5. The method (100) of claim 2,
wherein the information on the connection quality of the first connection (341) is indicative of a first received signal strength indication, RSSI, of the first connection (341) and obtaining the information on the connection quality of the first connection (341) comprises obtaining the RSSI of the first connection (341) from a first signal from the first BLE node (331),
wherein the information on the connection quality of the second connection (342) is indicative of a second RSSI of the second connection (342) and obtaining the information on the connection quality of the second connection (342) comprises obtaining the RSSI of the second connection (342) from a second signal from the second BLE node (332),
and wherein terminating (130) the first connection (341) and establishing the second connection (342) comprises terminating the first connection (341) and establishing the second connection (342) based on a comparison of the first and the second RSSI.

6. The method (100) of any one of the preceding claims, wherein the first BLE node (331) is installed inside the vehicle (320) and the second BLE node (332) is installed on the exterior of the vehicle (320) or the second BLE node (332) is installed inside the vehicle (320) and the first BLE node (331) is installed on the exterior of the vehicle (320).

7. The method (100) of any one of the preceding claims, wherein the first connection (341) serves a communication session between the user device (310) and the vehicle (320), and wherein terminating (130) the first connection (341) and establishing the second connection (342) comprises performing a handover of the communication session from the first connection (341) to the second connection (342).

8. A method (200) for a vehicle (320) and for controlling a connection between Bluetooth Low Energy, BLE, nodes (331, 332) of the vehicle (320) and a user device (310), the method (200) comprising:
establishing (210) a first connection (341) between a user device (310) and a first BLE node (331) of the vehicle (320);
providing (220) information on a connection quality of the first connection (341) to the user device (310);
providing (230) information on a connection quality provided by a second BLE node (332) of the vehicle (320) to the user device (310) for terminating the first connection (341) and establishing the second connection (342) based on a comparison of the first and the second information.

9. The method (200) of claim 8, wherein the method (200) further comprises transmitting identity information of the first and the second BLE node (331, 332) to the user device (310) for checking, by the user device (310), whether the identity information of the first and the second BLE node (331, 332) are identical and terminating the first connection (341) and establishing the second connection (342) if the identity information of the first and the second BLE node (331, 332) are identical.

10. The method (200) of claim 8 or 9,
wherein the first information is indicative of a first received signal strength indication, RSSI, of the first connection (341) and providing the first information comprises transmitting a first signal to the user device (310) for obtaining the RSSI of the first connection (341) from the first signal,
wherein the second information is indicative of a second RSSI of the second connection (342) and providing the second information comprises transmitting a second signal to the user device (310) for obtaining the RSSI of the second connection (342) from the second signal for terminating the first connection (341) and establishing the second connection (342) based on a comparison of the first and the second RSSI, by the user device (310).

11. A computer program having a program code for performing at least one of the methods (100, 200) of the preceding claims, when the computer program is executed on a computer, a processor, or a programmable hardware component.

12. An apparatus (400) comprising:
one or more interfaces (410) for communication; and
a data processing circuit (420) configured to:
control the one or more interfaces (410); and
execute, using the one or more interfaces (410), one of the methods (100, 200) of the claims 1 to 10.

13. A vehicle (320) comprising the apparatus (400) of claim 12.
